# EUROPEAN PATENT SPECIFICATION

(11) **EP 3 404 465 B1**
(45) Date of publication and mention of the grant of the patent: **16.10.2024**
(21) Application number: 18173084.7
(22) Date of filing: 18.05.2018
(51) Int. Cl.: G02B 27/00, B08B 17/02, B60S 1/02, B08B 13/00, B08B 7/02

(54) **DECONTAMINATION APPARATUS FOR VIEWING WINDOW**
DEKONTAMINATIONSVORRICHTUNG FÜR SICHTFENSTER
APPAREIL DE DÉCONTAMINATION POUR FENÊTRE DE VISUALISATION

(30) Priority: 19.05.2017 TW 106116571
(43) Date of publication of application: 21.11.2018
(73) Proprietor: Thuncloud Inc., Taichung City (TW)
(72) Inventor: Lai, Aling, Taichung City (TW)
(74) Representative: Cabinet Chaillot

(56) References cited:
- CN-U- 207 026 019
- DE-U1- 202017 100 300
- US-A- 3 347 004
- US-A- 3 688 081
- US-A- 5 927 010
- US-B2- 7 104 657

## Description

### FIELD OF THE INVENTION

The present invention relates to a decontamination apparatus, and more particularly to a decontamination apparatus for removing water and dirt on a viewing window.

### BACKGROUND OF THE INVENTION

Various optical image pickup devices, such as cameras, video cameras or monitors, comprise a lens assembly that is composed of a plurality of lenses arranged in a housing. However, in a rainy day or a foggy day, the outermost lens of the lens assembly (or a protection lens attached to the lens assembly) may have a phenomenon that water droplets are condensed and adhered to the lens, which will affect the imaging and generate an image obscured by the water droplet.

A common CNC automatic processing machine separates the processing area with a housing, which can limit the spraying range of the cutting fluid during processing. Wherein, the housing has a viewing window for the operator to observe the operating conditions inside the housing. However, the splattering of the cutting fluid may be adhered to the viewing window, which will result in the problem that the sight is obscured and the operator cannot observe the operating conditions clearly.

In order to solve the above problem, it is generally known to apply a water repellent film on the lens or the viewing window, thereby reducing the surface tension. Once a water droplet or dirt is condensed on the lens or the viewing window, it can quickly slide off and is hardly attached to the lens or the viewing window, thereby removing the water droplet or dirt. However, this way can only prevent larger water droplets or dirt from attaching to the lens or the viewing window. The smaller water droplets or dirt cannot overcome the surface tension and remains on the lens or the viewing window. It cannot completely improve the shortcoming of unclear or obscured sight. On the other hand, after being used a period of time, the coating film on the lens or the viewing window may crack or peel off, which deteriorates the effect of reducing the surface tension, so water droplets or dirt may be attached to the lens or the viewing window.

Accordingly, the inventor of the present invention has devoted himself based on his many years of practical experiences to solve these problems.

DE 20 2017 100300 U1 discloses a decontamination apparatus according to the preamble of claim 1. Another prior art document has been published as US 7104657 B2.

### SUMMARY OF THE INVENTION

The primary object of the present invention is to provide a decontamination apparatus for a viewing window, which drives a rotor to rotate relative to a stator to remove the water droplets attached to the viewing window, thereby preventing the sight from being obscured.

According to one aspect of the present invention, as defined in claim 1, a decontamination apparatus for a viewing window is provided. The decontamination apparatus comprises a cylinder and a rotating module. The rotating module is disposed at one end of the cylinder and connected with a viewing window. The rotating module can be driven to rotate, which further drives the viewing window to rotate for removing dirt attached to the viewing window.

The rotating module includes a rotor unit and at least one stator unit. The rotor unit surrounds the cylinder. The stator unit is fixed to an outer side of the cylinder and wound with an energizable coil. The rotor unit is pivotally connected to the cylinder. The viewing window is fixed on the rotor unit. The rotor unit is provided with a permanent magnet opposite to the stator unit.

A bearing is provided between the rotor unit and the cylinder. Furthermore, the rotor unit includes a first block, a second block and a third block threadedly connected in sequence. Further features of the decontamination apparatus are defined in claim 1.

According to another aspect of the present disclosure, not forming part of the claimed invention, a decontamination apparatus for a viewing window is provided. The decontamination apparatus comprises a cylinder and a rotating module. The cylinder is connected with a viewing window. The rotating module is disposed at one end of the cylinder and connected with a wiper in contact with the viewing window. The rotating module can be driven to rotate, which further drives the wiper to turn for removing dirt attached to the viewing window.

Preferably, the rotating module includes a rotor unit and at least one stator unit. The stator unit is fixed to an outer side of the cylinder and wound with an energizable coil. The rotor unit is pivotally connected to the cylinder. The wiper is fixed on the rotor unit. The rotor unit is provided with a permanent magnet opposite to the stator unit.

Preferably, a bearing is provided between the rotor unit and the cylinder. Furthermore, the rotor unit includes a first block, a second block and a third block threadedly connected in sequence. The first block is connected with the bearing. The second block is connected with the permanent magnet. The third block is connected with the wiper.

### BRIEF DESCRIPTION OF THE DRAWINGS

FIG. 1 is an exploded view in accordance with a first embodiment of the present invention;
FIG. 2 is a sectional view in accordance with the first embodiment of the present invention;
FIG. 3 is a sectional view in accordance with a second embodiment of the present invention;
FIG. 4 is an exploded view in accordance with a third example which is not an embodiment of the present invention;
FIG. 5 is a sectional view in accordance with the third example which is not an embodiment of the present invention;
FIG. 6 is a sectional view in accordance with a fourth example which is not an embodiment of the present invention;
FIG. 7 is a sectional view in accordance with a fifth embodiment of the present invention; and
FIG. 8 is a sectional view in accordance with a sixth example which is not an embodiment of the present invention.

### DETAILED DESCRIPTION OF THE PREFERRED EMBODIMENTS

Embodiments of the present invention will now be described, by way of example only, with reference to the accompanying drawings.

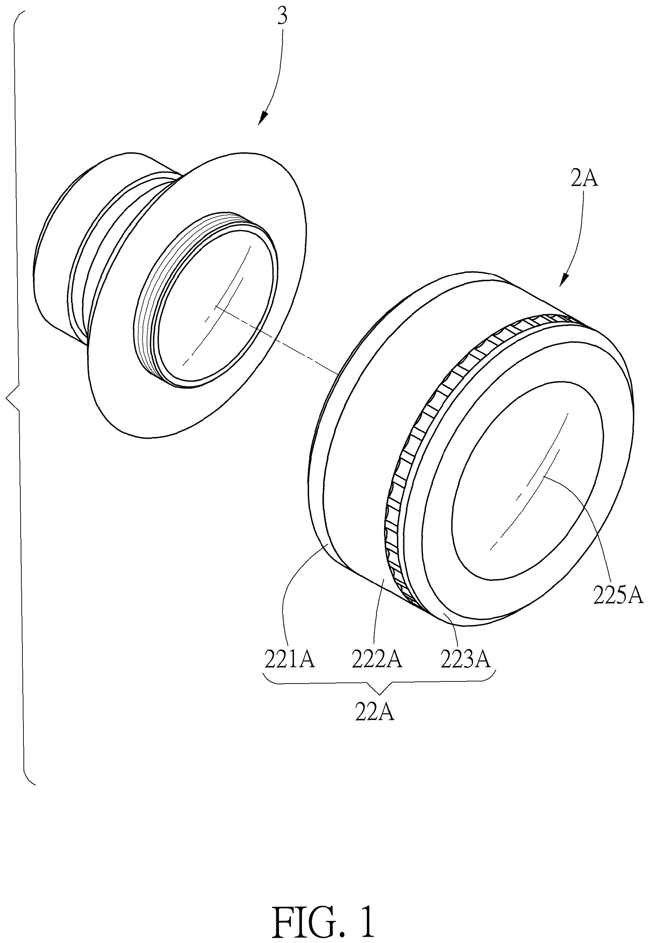

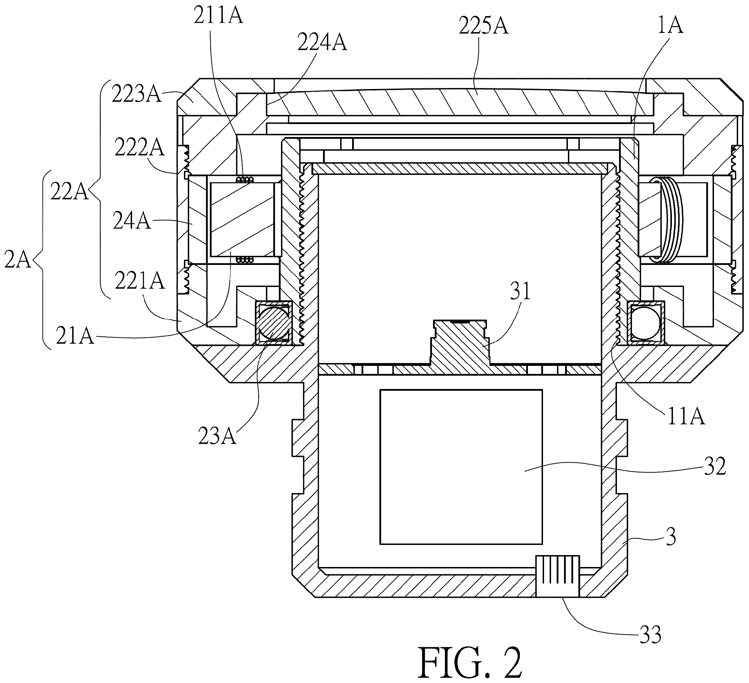

FIGS. 1 and 2 show a decontamination apparatus for a viewing window in accordance with a first embodiment of the present invention. The decontamination apparatus is mounted on a lens 3 and comprises a cylinder 1A. One end of the cylinder 1A is provided with a connecting portion 11A (in this embodiment, the connecting portion is a screw thread) for connecting the lens 3. An imaging unit 31 is provided inside the lens 3. The imaging unit 31 is electrically connected to a circuit board 32 and further connected to an external connecting port 33.

The other end of the cylinder 1A is provided with a rotating module 2A. The rotating module 2A is provided with a viewing window 225A. In more detail, in this embodiment, the rotating module 2A includes a rotor unit 22A and at least one stator unit 21A. The stator unit 21A is annularly disposed on an outer side of the cylinder 1A. The stator unit 21A is wound with an energizable coil 211A. The rotor unit 22A is formed in an annular shape and surrounds the cylinder 1A, and is pivotally connected to the cylinder 1A through a bearing 23A so that the rotor unit 22A can be rotated relative to the cylinder 1A. One end of the rotor unit 22A is formed with an opening 224A. The viewing window 225A is disposed in the opening 224A to seal the opening 224A.

A permanent magnet 24A is provided on the rotor unit 22A at a position opposite to the stator unit 21A. Accordingly, when the coil 211A on the stator unit 21A is energized, an induced magnetic field is generated, and by interaction with the magnetic force of the permanent magnet 24A, the rotor unit 22A can be rotated relative to the cylinder 1A.

In this embodiment, the rotor unit 22A has a first block 221A, a second block 222A, and a third block 223A. The three blocks are threadedly connected in sequence. Wherein, the bearing 23A is connected to the first block 221A. The permanent magnet 24A is disposed on the second block 222A. The viewing window 225A is fixed on the third block 223A. These three blocks are assembled sequentially to form the rotor unit 22A, and then the rotor unit 22A is assembled to the cylinder 1A.

In the present invention composed of the above components, because the viewing window 225A is located on the outside of the lens 3, water droplets such as rain or dew condensation will adhere to the viewing window 225A. When in use, an induced magnetic field is generated by electrically driving the coil 211A on the stator unit 21A, which in turn interacts with the permanent magnet 24A on the rotor unit 22A so as to drive the rotor unit 22A to rotate, and the rotor unit 22A drives the viewing window 225A to rotate synchronously. Accordingly, water droplets attached to the viewing window 225A are removed to make the image clearer. Furthermore, in the present invention, a water repellent film may be coated on the viewing window 225A, thereby reducing the surface tension of the viewing window 225A and further enhancing the ability to remove water droplets.

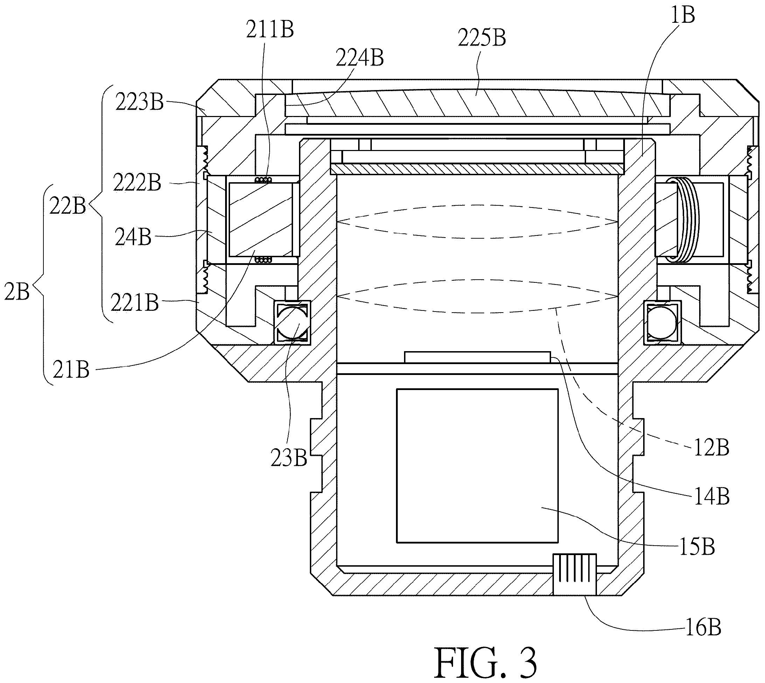

FIG. 3 shows a second embodiment of the present invention, which is constructed together with a lens. The structure of this embodiment includes a cylinder 1B as a lens housing, and an imaging lens assembly 12B composed of a plurality of lenses is accommodated in the interior of the cylinder 1B. The cylinder 1B further includes an imaging chipset 14B therein. The imaging chipset 14B is electrically connected to a circuit board 15B and further connected to an external connecting port 16B.

One end of the cylinder 1B is provided with a rotating module 2B. The rotating module 2B is provided with a viewing window 225B which can form a protective effect on the imaging lens assembly 12B. In more detail, in this embodiment, the rotating module 2B includes a rotor unit 22B and at least one stator unit 21B. The stator unit 21B is annularly disposed on an outer side of the cylinder 1B. The stator unit 21B is wound with an energizable coil 211B. The rotor unit 22B is formed in an annular shape and surrounds the cylinder 1B, and is pivotally connected to the cylinder 1B through a bearing 23B so that the rotor unit 22B can be rotated relative to the cylinder 1B. One end of the rotor unit 22B is formed with an opening 224B. The viewing window 225B is disposed in the opening 224B to seal the opening 224B.

A permanent magnet 24B is provided on the rotor unit 22B at a position opposite to the stator unit 21B. Accordingly, when the coil 211B on the stator unit 21B is energized, an induced magnetic field is generated, and by interaction with the magnetic force of the permanent magnet 24B, the rotor unit 22B can be rotated relative to the cylinder 1B.

In this embodiment, the rotor unit 22B has a first block 221B, a second block 222B, and a third block 223B. The three blocks are threadedly connected in sequence. Wherein, the bearing 23B is connected to the first block 221B. The permanent magnet 24B is disposed on the second block 222B. The viewing window 225B is fixed on the third block 223B. These three blocks are assembled sequentially to form the rotor unit 22B, and then the rotor unit 22B is assembled to the cylinder 1B.

In this embodiment, because the viewing window 225B is located on the outside of the imaging lens assembly 12B, water droplets such as rain or dew condensation will adhere to the viewing window 225B. When this embodiment is used, same as the foregoing first embodiment, an induced magnetic field is generated by electrically driving the coil 211B on the stator unit 21B, which in turn interacts with the permanent magnet 24B on the rotor unit 22B so as to drive the rotor unit 22B to rotate, and the rotor unit 22B drives the viewing window 225B to rotate synchronously. Accordingly, water droplets attached to the viewing window 225B are removed to make the image clearer.

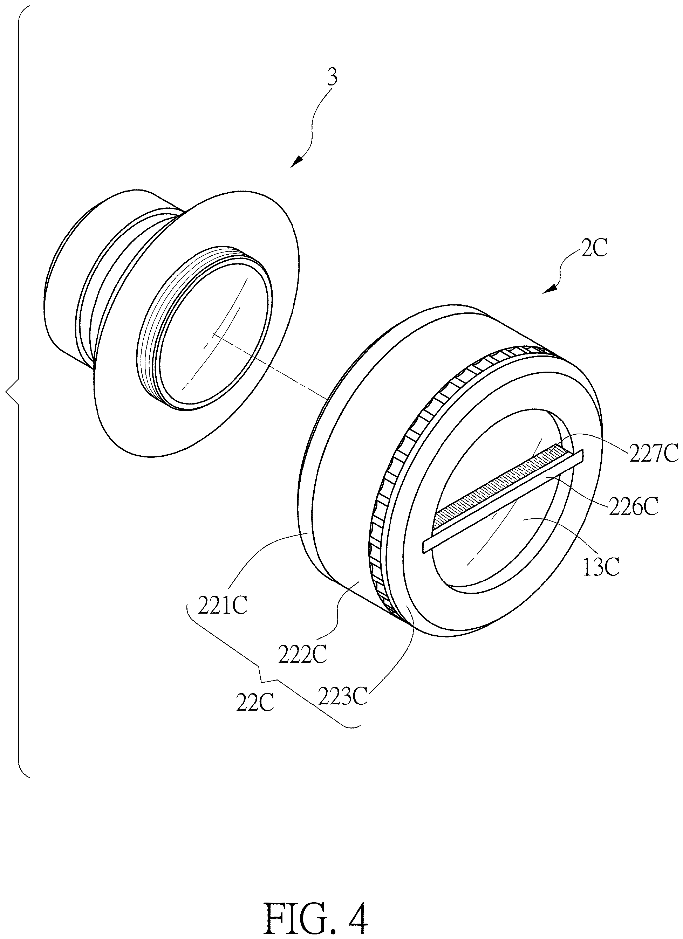

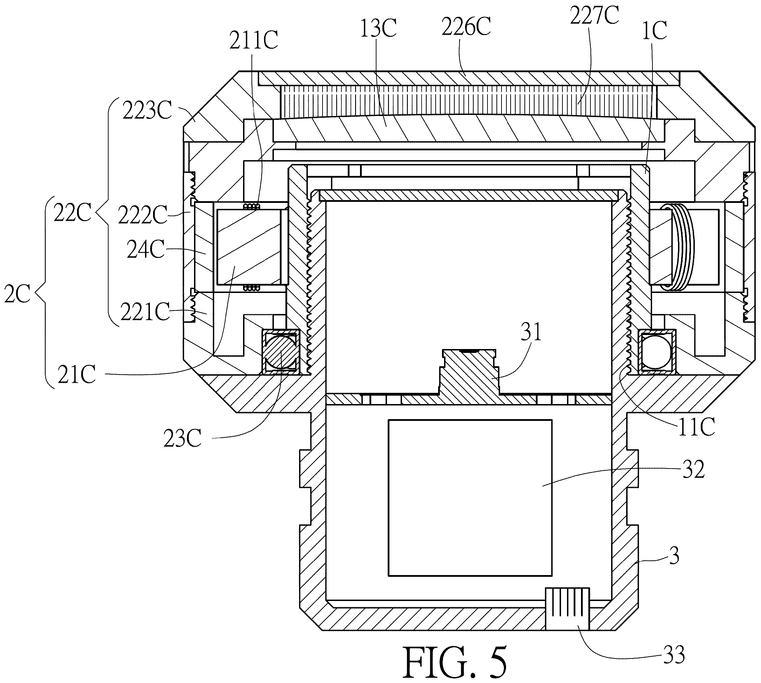

FIGS. 4 and 5 show a third example which is not an embodiment of the present invention, which is an add-on decontamination apparatus as the first embodiment. This example is based on the foregoing first embodiment and has a slight structural change. The decontamination apparatus comprises a cylinder 1C. One end of the cylinder 1C is provided with a connecting portion 11C (in this example, the connecting portion is a screw thread) for connecting a lens 3. An imaging unit 31 is provided inside the lens 3. The imaging unit 31 is electrically connected to a circuit board 32 and further connected to an external connecting port 33. The other end of the cylinder 1C is provided with a rotating module 2C. The rotating module 2C is provided with a viewing window 13C. The rotating module 2C includes a rotor unit 22C and at least one stator unit 21C. The stator unit 21C is annularly disposed on an outer side of the cylinder 1C. The stator unit 21C is wound with an energizable coil 211C. The rotor unit 22C is formed in an annular shape and surrounds the cylinder 1C, and is pivotally connected to the cylinder 1C through a bearing 23C. A permanent magnet 24C is provided on the rotor unit 22C at a position opposite to the stator unit 21C. Accordingly, when the coil 211C on the stator unit 21C is energized, an induced magnetic field is generated, and by interaction with the magnetic force of the permanent magnet 24C, the rotor unit 22C can be rotated relative to the cylinder 1C.

One end of the rotor unit 22C is provided with a wiper 226C having a blade 227C extending from the wiper 226C. The blade 227C is in contact with the viewing window 13C. Accordingly, when the rotor unit 22C is driven and rotated, the wiper 226C will be turned synchronously, so that the blade 227C brushes the viewing window 13C back and forth, and water droplets attached to the viewing window 13C can be removed.

Furthermore, the rotor unit 22C has a first block 221C, a second block 222C, and a third block 223C. The three blocks are threadedly connected in sequence. Wherein, the bearing 23C is connected to the first block 221C. The permanent magnet 24C is disposed on the second block 222C. The wiper 226C is fixed on the third block 223B.

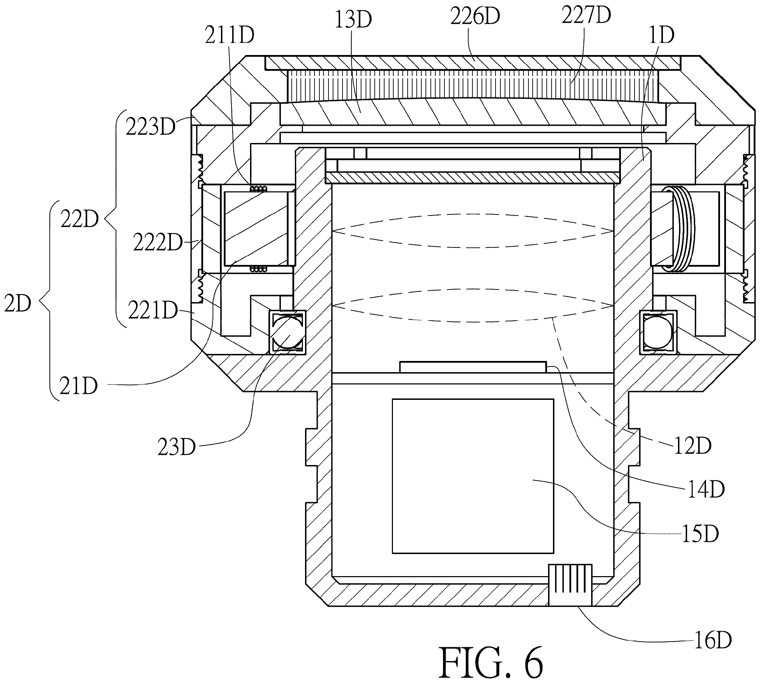

FIG. 6 shows a fourth example which is not an J 2. embodiment of the present invention, which is a built-in decontamination apparatus as the first embodiment. This example is based on the foregoing second embodiment and has a slight structural change. The decontamination apparatus comprises a cylinder 1D as a lens housing, and an imaging lens assembly 12D composed of a plurality of lenses is accommodated in the interior of the cylinder 1D. The cylinder 1D further includes an imaging chipset 14D therein. The imaging chipset 14D is electrically connected to a circuit board 15D and further connected to an external connecting port 16D. One end of the cylinder 1D is provided with a rotating module 2D. The rotating module 2D is provided with a viewing window 13D. The rotating module 2D includes a rotor unit 22D and at least one stator unit 21D. The stator unit 21D is annularly disposed on an outer side of the cylinder 1D. The stator unit 21D is wound with an energizable coil 211D. The rotor unit 22D is formed in an annular shape and surrounds the cylinder 1D, and is pivotally connected to the cylinder 1D through a bearing 23D. A permanent magnet 24D is provided on the rotor unit 22D at a position opposite to the stator unit 21D. Accordingly, when the coil 211D on the stator unit 21D is energized, an induced magnetic field is generated, and by interaction with the magnetic force of the permanent magnet 24D, the rotor unit 22D can be rotated relative to the cylinder 1D.

One end of the rotor unit 22D is provided with a wiper 226D having a blade 227D extending from the wiper 226D. The blade 227D is in contact with the viewing window 13D. Accordingly, when the rotor unit 22D is driven and rotated, the wiper 226D will be turned synchronously, so that the blade 227D brushes the viewing window 13D back and forth, and water droplets attached to the viewing window 13D can be removed.

Furthermore, the rotor unit 22D has a first block 221D, a second block 222D, and a third block 223D. The three blocks are threadedly connected in sequence. Wherein, the bearing 23D is connected to the first block 221D. The permanent magnet 24D is disposed on the second block 222D. The wiper 226D is fixed on the third block 223D.

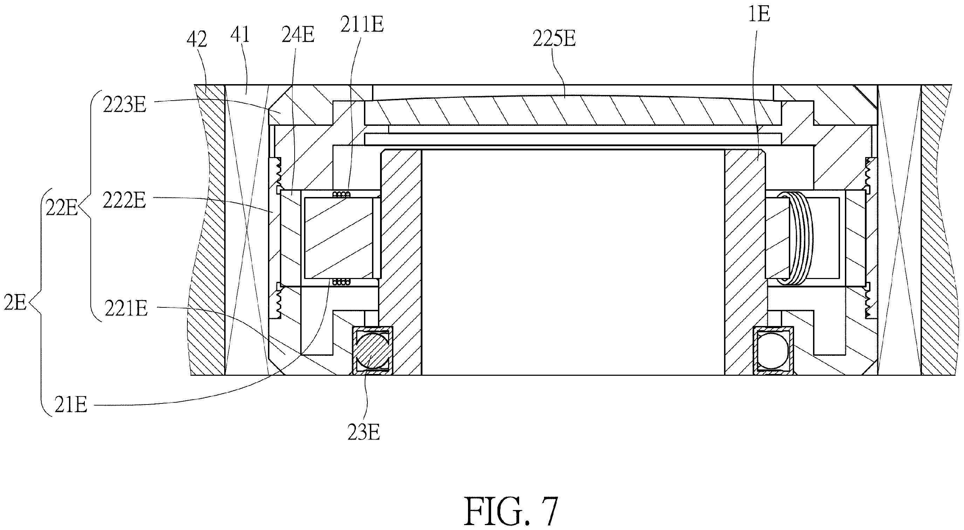

FIG. 7 shows a fifth embodiment of the present invention, which is applied to a viewing window structure, such as a viewing window of a CNC automatic processing machine. In this embodiment, the decontamination apparatus is disposed in a partition wall 42 through a bearing 41, and comprises a cylinder 1E. The cylinder 1E is provided with a rotating module 2E. The rotating module 2E includes a rotor unit 22E and at least one stator unit 21E. The stator unit 21E is annularly disposed on an outer side of the cylinder 1E. The stator unit 21E is wound with an energizable coil 211E. The rotor unit 22E is formed in an annular shape and surrounds the cylinder 1E, and is pivotally connected to the cylinder 1E through a bearing 23E. A permanent magnet 24E is provided on the rotor unit 22E at a position opposite to the stator unit 21E. Accordingly, when the coil 211E on the stator unit 21E is energized, an induced magnetic field is generated, and by interaction with the magnetic force of the permanent magnet 24E, the rotor unit 22E can be rotated relative to the cylinder 1E.

In this embodiment, the rotor unit 22E has a first block 221E, a second block 222E, and a third block 223E. The three blocks are threadedly connected in sequence. Wherein, the bearing 23E is connected to the first block 221E. The permanent magnet 24E is disposed on the second block 222E. The third block 223B is provided with a viewing window 225E.

With the above structure, when the cutting fluid of the automatic processing machine is sprayed onto the viewing window 225E, the viewing window 225E can be rotated along with the rotation of the rotor unit 22E, and then the oil stains on the viewing window 225E can be removed to achieve a good view.

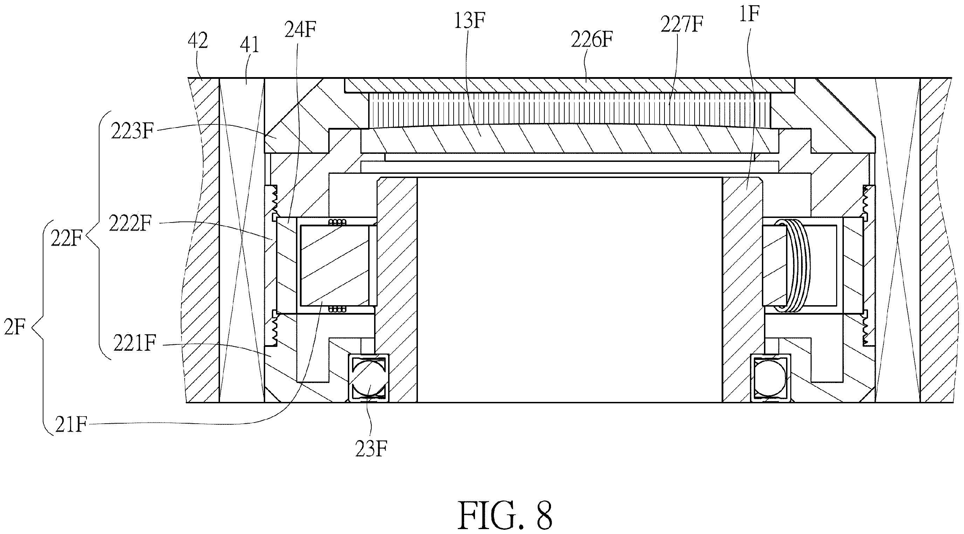

FIG. 8 shows a sixth example which is not an embodiment of the present invention, which is applied to a viewing window structure, such as a viewing window of a CNC automatic processing machine. In this example, the decontamination apparatus is disposed in a partition wall 42 through a bearing 41, and comprises a cylinder 1F. One end of the cylinder 1F is provided with a viewing window 13F. The cylinder 1F is provided with a rotating module 2F. The rotating module 2E includes a rotor unit 22F and at least one stator unit 21F. The stator unit 21F is annularly disposed on an outer side of the cylinder 1F. The stator unit 21F is wound with an energizable coil 211F. The rotor unit 22F is formed in an annular shape and surrounds the cylinder 1E, and is pivotally connected to the cylinder 1F through a bearing 23F. A permanent magnet 24F is provided on the rotor unit 22F at a position opposite to the stator unit 21F. Accordingly, when the coil 211F on the stator unit 21F is energized, an induced magnetic field is generated, and by interaction with the magnetic force of the permanent magnet 24F, the rotor unit 22F can be rotated relative to the cylinder 1F.

In this example, the rotor unit 22F has a first block 221F, a second block 222F, and a third block 223F. The three blocks are threadedly connected in sequence. Wherein, the bearing 23F is connected to the first block 221F. The permanent magnet 24F is disposed on the second block 222F. The third block 223B is provided with a wiper 226F having a blade 227F extending from the wiper 226F. The blade 227CFis in contact with the viewing window 13F.

With the above structure, when the cutting fluid of the automatic processing machine is sprayed onto the viewing window 13F, the wiper 226 can be turned along with the rotation of the rotor unit 22F, so that the blade 227F brushes the viewing window 13F back and forth to remove the oil stains on the viewing window 13F to achieve a good view.

Although particular embodiments of the present invention have been described in detail for purposes of illustration, various modifications and enhancements may be made without departing from the scope of the claims. Accordingly, the present invention is not to be limited except as by the appended claims.

## Claims

1. A decontamination apparatus for a viewing window, comprising:
a cylinder (1A); and
a rotating module (2A), disposed at one end of the cylinder (1A) and connected with a viewing window (225A); the rotating module (2A) can be driven to rotate, which further drives the viewing window (225A) to rotate for removing dirt attached to the viewing window (225A),
**characterized in that** the rotating module (2A) includes a rotor unit (22A) and at least one stator unit (21A); the rotor unit (22A) surrounds the cylinder (1A); the stator unit (21A) is fixed to an outer side of the cylinder (1A) and wound with an energizable coil (211A); the rotor unit (22A) is pivotally connected to the cylinder (1A), the viewing window (225A) is fixed on the rotor unit (22A), and the rotor unit (22A) is provided with a permanent magnet (24A) opposite to the stator unit (21A), wherein a bearing (23A) is provided between the rotor unit (22A) and the cylinder (1A), and wherein the rotor unit (22A) includes a first block (221A), a second block (222A) and a third block (223A) threadedly connected in sequence; the bearing (23A) is socketed between the first block (221A) and the cylinder (1A), the permanent magnet (24A) is assembled on an inner wall of the second block (222A) and is faced to the stator unit (21A), and the viewing window (225A) is socketed in the third block (223 A).

## Patentansprüche

1. - Dekontaminationsvorrichtung für ein Sichtfenster, umfassend:
einen Zylinder (1A); und
ein Drehmodul (2A), das an einem Ende des Zylinders (1A) angeordnet und mit einem Sichtfenster (225A) verbunden ist; wobei das Drehmodul (2A) angetrieben werden kann, um zu drehen, wodurch das Sichtfenster (225A) weiter angetrieben wird, um zu drehen, um dem Sichtfenster (225A) anhaftenden Schmutz zu entfernen,
**dadurch gekennzeichnet, dass** das Drehmodul (2A) eine Rotoreinheit (22A) und mindestens eine Statoreinheit (21A) beinhaltet; die Rotoreinheit (22A) den Zylinder (1A) umgibt; die Statoreinheit (21A) an einer Außenseite des Zylinders (1A) befestigt und mit einer erregbaren Spule (211A) umwickelt ist; die Rotoreinheit (22A) schwenkbar mit dem Zylinder (1A) verbunden ist, das Sichtfenster (225A) an der Rotoreinheit (22A) befestigt ist, und die Rotoreinheit (22A) mit einem Permanentmagneten (24A) gegenüber der Statoreinheit (21A) versehen ist, wobei ein Lager (23A) zwischen der Rotoreinheit (22A) und dem Zylinder (1A) bereitgestellt ist, und wobei die Rotoreinheit (22A) einen ersten Block (221A), einen zweiten Block (222A) und einen dritten Block (223A) beinhaltet, die aufeinanderfolgenden verschraubt sind; das Lager (23A) zwischen dem ersten Block (221A) und dem Zylinder (1A) eingelassen ist, der Permanentmagnet (24A) an einer Innenwand des zweiten Blocks (222A) montiert ist und der Statoreinheit (21A) zugewandt ist, und das Sichtfenster (225A) in dem dritten Block (223A) eingelassen ist.

## Revendications

1. - Appareil de décontamination pour fenêtre d'observation, comprenant :
un cylindre (1A) ; et
un module rotatif (2A), disposé à une extrémité du cylindre (1A) et relié à une fenêtre d'observation (225A) ; le module rotatif (2A) peut être entraîné en rotation, ce qui entraîne également en rotation la fenêtre d'observation (225A) pour retirer des saletés attachées à la fenêtre d'observation (225A),
**caractérisé par le fait que** le module rotatif (2A) comprend une unité rotor (22A) et au moins une unité stator (21A) ; l'unité rotor (22A) entoure le cylindre (1A) ; l'unité stator (21A) est fixée à un côté extérieur du cylindre (1A) et entourée d'une bobine énergisable (211A) ; l'unité rotor (22A) est reliée de manière pivotante au cylindre (1A), la fenêtre d'observation (225A) est fixée sur l'unité rotor (22A), et l'unité rotor (22A) comporte un aimant permanent (24A) en regard de l'unité stator (21A), un palier (23A) étant disposé entre l'unité rotor (22A) et le cylindre (1A), et l'unité rotor (22A) comprenant un premier bloc (221A), un deuxième bloc (222A) et un troisième bloc (223A) assemblés par filetage en séquence ; le palier (23A) est encastré entre le premier bloc (221A) et le cylindre (1A), l'aimant permanent (24A) est assemblé sur une paroi intérieure du deuxième bloc (222A) et fait face à l'unité stator (21A), et la fenêtre d'observation (225A) est encastrée dans le troisième bloc (223A) .
